# EUROPEAN PATENT SPECIFICATION

(11) **EP 3 635 275 B1**
(45) Date of publication and mention of the grant of the patent: **23.02.2022**
(21) Application number: 18810354.3
(22) Date of filing: 29.05.2018
(51) Int. Cl.: B66B 7/08, B66D 1/34

(54) **DEVICE AND METHOD FOR SECURING END OF BRAIDED HOISTING ROPE TO LIFTING DEVICE**
VORRICHTUNG UND VERFAHREN ZUM BEFESTIGEN DES ENDES EINES GEFLOCHTENEN AUFZUGSSEILS AN EINER HEBEVORRICHTUNG
DISPOSITIF ET PROCÉDÉ POUR FIXER UNE EXTRÉMITÉ D'UN CÂBLE TRESSÉ DE LEVAGE À UN DISPOSITIF DE LEVAGE

(30) Priority: 31.05.2017 FI 20175491
(43) Date of publication of application: 15.04.2020
(73) Proprietor: Konecranes Global Corporation, 05830 Hyvinkää (FI)
(72) Inventor: HOOVER, Jack, 05830 Hyvinkää (FI)
(74) Representative: Kolster Oy Ab
(86) International application number: PCT/FI2018/050405
(87) International publication number: WO 2018/220276

(56) References cited:
- WO-A1-94/20770
- JP-U- S5 489 772
- US-A- 5 526 552
- US-A- 5 855 254
- US-A1- 2010 037 436

## Description

### Background of the invention

The invention relates to a device and method for securing an end of a braided hoisting rope to a lifting device.

In hoisting ropes of a steel material, it is known to use a wedge pocket by means of which the hoisting rope is secured to a lifting device. When it is desired to use a synthetic material, the use of a wedge pocket may damage the hoisting rope even if the fastening were reliable to begin with. A device for securing such a hoisting device is known from publication US 552 6552 A or US 585 5254 A, for instance.

It is therefore the object of the present invention to develop a securing method for a hoisting rope of a synthetic material, specifically, which does not damage the hoisting rope but nevertheless guarantees a reliable fastening.

### Summary of the invention

The object of the invention is achieved by the inventive device as defined in claim 1, which is characterised in that it comprises a tubular fastening frame to be fixed to the lifting device; and a coil spring which is arranged to be installed and fastened over the tubular fastening frame; whereby when an end of a hoisting rope is fastened in place, the hollow, or workable into hollow, end of the hoisting rope is threaded over the windings of the coil spring as the outer surface of the windings and into contact with, or to be brought into contact with the outer periphery of the tubular fastening frame.

The method according to the invention is in turn characterised by arranging a tubular fastening frame to be fastened to a lifting device; arranging a coil spring installed and fastened over the tubular fastening frame; arranging a braided hoisting rope, an end of which is formed hollow or formable hollow; threading an end of the hoisting rope over the coil spring; and fastening the coil spring over the tubular frame either before threading the hoisting rope over it or after the hoisting rope has been threaded over the coil spring.

The invention is based on that the hoisting rope threaded over the coil spring fastened or to be fastened to the fastening frame as a holder in the lifting device will tighten around the coil spring, and the entity formed by the hoisting rope and coil spring in turn around the fastening frame, the hoisting rope stays locked in place mainly by way of friction.

When there are enough rope turns of the entity formed by the coil spring and hoisting rope around the fastening frame, for example at least approximately three turns, the fastening friction is spread out on an adequately wide fastening surface area, whereby the hoisting rope will not get damaged. This fastening surface area may be widened and thus the fastening friction enhanced by forming a spiral-like grooving on the surface of the tubular fastening frame, which meshes with the outer surface of the rope installed on the windings of the coil spring. Alternatively, instead of the grooving or in addition to the grooving, the outer surface of the fastening frame may have a roughening.

It is easy to install the hoisting rope to the fastening frame as long as the fastening frame is made to be detachable from the lifting device in a simple enough manner, for example by means of an angular or grooved centre hole in the fastening frame, fastenable to a fastening axle of a similar form on the lifting device. In such a case, the detaching of the fastening frame takes place by simply pulling the fastening frame from the fastening axle.

The coil spring is advantageously made of a steel material, most advantageously of spring steel. The fastening end of the coil spring may be bent and fastened to the tubular fastening frame by form locking, or to a recess in the periphery of the fastening frame by a screw fastening. The surface of the coil spring may be roughened, too. So, the surfaces of both the fastening frame and the coil spring may be roughened, or one of them roughened, or no roughening on either one.

The securing of the hoisting rope to the tubular fastening frame and/or coil spring may also be ensured by separate mechanical fastening means.

### List of figures

The invention is now described in closer detail by means of one preferred embodiment and with reference to the accompanying drawings, in which
Figure 1 shows the device according to the invention without the hoisting rope; and
Figure 2 shows the device according to the invention with the hoisting rope installed.

### Detailed description of the invention

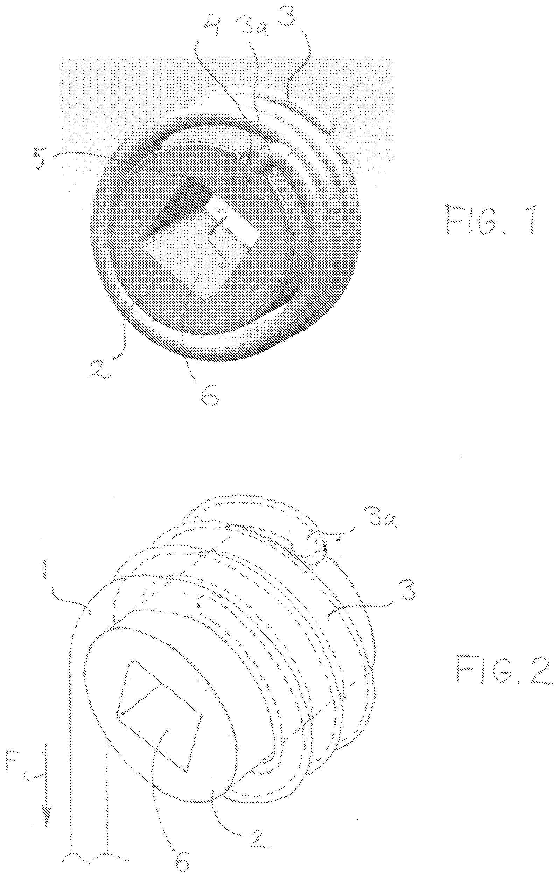

With reference to Figure 1, the inventive device for securing an end of a braided hoisting rope 1 of a synthetic material, specifically, to a lifting device comprises as its main components a tubular fastening frame 2 fastened to the lifting device, and a coil spring 3 which is arranged to be installed and fastened over the outer periphery of the tubular fastening frame 2. The definition end of hoisting rope 1 must here be interpreted as a particular portion of the hoisting rope, starting from its "end". The lifting device or hoist is not described herein, because it is not essential for the invention.

The coil spring 3 may be fastened over the tubular frame 2 either before the end of the hoisting rope 1 is threaded over it, or after the hoisting rope 1 has been threaded over the coil spring 3. For this, the windings of the coil spring 3 are in such a way at a small distance from the outer periphery of the fastening frame 2 that the hollow, or workable into hollow, end of the hoisting rope 1 may be threaded on the windings even if the coil spring 3 were fastened in place. So, the inner diameter of the coil spring 3 is smaller than the outer diameter of the fastening frame 2. The essential issue is that when the end of the hoisting rope 1 is secured in place, its hollow, or workable into hollow, end is threaded over the windings of the coil springs as the outer surface of the windings and into contact or to be brought into contact with the surface of the tubular fastening frame 2. The bringing of the end of the hoisting rope 1 into a tight or non-slipping contact with the periphery of the fastening frame 2 takes place or must take place at the latest when tensile force F caused by lifting a load is exerted on the hoisting rope 1.

The outer periphery of the tubular fastening frame 2 may be provided with a spiral-like grooving, which meshes with the outer surface of the hoisting rope 1 installed over the windings of the coil spring 3. Alternatively, instead of the grooving or in addition to the grooving, the outer surface of the fastening frame 2 may have a roughening.

The coil spring 3 may have approximately 2.5 to 3,5 windings over the tubular fastening frame 2. The fastening end 3a of the coil spring 3 is advantageously bent and fastened to a recess 4 in the periphery of the tubular fastening frame 2 by a screw fastening 5. The coil spring 3 may be of spring steel, for example. The surface of the coil spring 2 may be roughened, too.

The tubular fastening frame 2 has a centre hole 6 for attaching the tubular fastening frame 2 to the lifting device. The centre hole 6 may be angular, as shown in Figure 1, or grooved in the longitudinal direction, for example.

The securing of the end of the hoisting rope 1 to the tubular fastening frame and/or coil spring may also be ensured by separate mechanical fastening means, if so required.

In a prototype implementation, in which the minimum break force of the hoisting rope was 50 kN, a coil spring with the diameter of 8 mm (SF-TFV 8x80x100 EN 10270-1-SM) was used. The inner diameter of this coil spring was 80 mm, whereby 60 mm was chosen as the diameter of the fastening frame. The periphery of the fastening frame was non-grooved. With this implementation, the maximum friction force of 41 kN was reached between the fastening frame and hoisting rope.

In an ideal case, the diameters of the hoisting rope 1 and coil spring 3 are substantially equal. If the coil spring 3 is too thin (so, clearly thinner than the hoisting rope 1), the hoisting rope 1 will not stay in it. If the coil spring 3 is too thick (so, clearly thicker than the hoisting rope 1), the strands of the hoisting rope 1 will cut around the coil spring 3. If the diameter dimension of 8 mm is used for the coil spring and the hoisting rope, it is advantageous to linearly thin the cross-section of the coil spring by approximately 70 % over a distance of 100 mm from the end of the coil spring. If said diameter dimension is larger, thinning by a suitable amount is done over a longer distance.

The above description of the invention is only intended to illustrate the basic idea of the invention. A person skilled in the art may, however, implement its details within the scope of the attached claims.

## Claims

1. A device for securing an end of braided hoisting rope (1) to a lifting device, **characterised in that** it comprises
a tubular fastening frame (2) to be fixed to the lifting device;
a coil spring (3) which is arranged to be installed and fastened over the tubular fastening frame (2);
a hoisting rope (1) comprising a hollow end or workable into a hollow end;
wherein said end of the hoisting rope (1) is arranged to be secured in place by threading over the windings of the coil spring (3) as the outer surface of the windings and into contact or to be brought into contact with the surface of the tubular fastening frame (2).

2. A device as claimed in claim 1, **characterised in that** the tubular fastening frame (2) has a centre hole (6) for attaching the tubular fastening frame (2) to the lifting device.

3. A device as claimed in claim 2, **characterised in that** the centre hole (6) is angular or grooved in the longitudinal direction.

4. A device as claimed in any one of the preceding claims, **characterised in that** the outer periphery of the tubular fastening frame (2) is provided with a spiral-like grooving, which meshes with the outer surface of the hoisting rope (1) installed over the windings of the coil spring (3).

5. A device as claimed in any one of the preceding claims, **characterised in that** there is a roughening on the outer periphery of the tubular fastening frame (2).

6. A device as claimed in any one of the preceding claims, **characterised in that** the coil spring (3) has approximately 2.5 to 3.5 windings over the tubular fastening frame (2).

7. A device as claimed in any one of the preceding claims, **characterised in that** the coil spring (3) is made of spring steel.

8. A device as claimed in any one of the preceding claims, **characterised in that** the surface of the coil spring (3) is roughened.

9. A device as claimed in any one of the preceding claims, **characterised in that** a fastening end of the coil spring (3) is bent and fastened to a recess (4) in the periphery of the tubular fastening frame (2) by a screw fastening (5).

10. A device as claimed in any one of claims 1 to 8, **character**is e d in that the fastening end of the coil spring (3) is bent and fastened to the tubular fastening frame (2) by form locking.

11. A device as claimed in any one of the preceding claims, **characterised in that** the hoisting rope (1) is of a synthetic material.

12. A device as claimed in any one of the preceding claims, **characterised in that** the fastening of the hoisting rope (1) to the tubular fastening frame (2) and/or to the coil spring (3) is additionally ensured by separate mechanical fastening means.

13. A method for securing an end of braided hoisting rope (1) to a lifting
device, **characterised by**
arranging a tubular fastening frame (2) to be fixed to a lifting device;
arranging a coil spring (3) to be installed and fastened over the tubular fastening frame (2);
arranging a braided hoisting rope (1), an end of which is formed hollow or formable hollow;
threading an end of the hoisting rope (1) over the coil spring; and
fastening the coil spring (3) over the tubular fastening frame (2) either before threading the end of the hoisting rope (1) over it or after the hoisting rope (1) has been threaded over the coil spring (3).

## Patentansprüche

1. Vorrichtung zum Sichern eines Endes eines geflochtenen Hebeseils (1) an einer Hebevorrichtung, **dadurch gekennzeichnet, dass** sie Folgendes umfasst
einen rohrförmigen Befestigungsrahmen (2), der an der Hebevorrichtung zu fixieren ist;
eine Schraubenfeder (3), die angeordnet ist, über dem rohrförmigen Befestigungsrahmen (2) installiert und befestigt zu werden;
ein Hebeseil (1), das ein hohles Ende umfasst oder zu einem hohlen Ende ausgestaltbar ist;
wobei das Ende des Hebeseils (1) angeordnet ist, durch Schrauben über die Windungen der Schraubenfeder (3) als der Außenfläche der Windungen und in Kontakt mit der Fläche des rohrförmigen Befestigungsrahmens (2) am Ort gesichert oder mit derselben in Kontakt gebracht zu werden.

2. Vorrichtung nach Anspruch 1, **dadurch gekennzeichnet, dass** der rohrförmige Befestigungsrahmen (2) ein mittleres Loch (6) zum Anbringen des rohrförmigen Befestigungsrahmens (2) an der Hebevorrichtung aufweist.

3. Vorrichtung nach Anspruch 2, **dadurch gekennzeichnet, dass** das mittlere Loch (6) in der Längsrichtung abgewinkelt oder genutet ist.

4. Vorrichtung nach einem der vorhergehenden Ansprüche, **dadurch gekennzeichnet, dass** der Außenumfang des rohrförmigen Befestigungsrahmens (2) mit einer spiralartigen Nutung versehen ist, die in die Außenfläche des Hebeseils (1), das über die Windungen der Schraubenfeder (3) installiert ist, eingreift.

5. Vorrichtung nach einem der vorhergehenden Ansprüche, **dadurch gekennzeichnet, dass** der Außenumfang des rohrförmigen Befestigungsrahmens (2) eine Aufrauung aufweist.

6. Vorrichtung nach einem der vorhergehenden Ansprüche, **dadurch gekennzeichnet, dass** die Schraubenfeder (3) ungefähr 2,5 bis 3,5 Windungen über dem rohrförmigen Befestigungsrahmen (2) aufweist.

7. Vorrichtung nach einem der vorhergehenden Ansprüche, **dadurch gekennzeichnet, dass** die Schraubenfeder (3) aus Federstahl besteht.

8. Vorrichtung nach einem der vorhergehenden Ansprüche, **dadurch gekennzeichnet, dass** die Fläche der Schraubenfeder (3) aufgeraut ist.

9. Vorrichtung nach einem der vorhergehenden Ansprüche, **dadurch gekennzeichnet, dass** ein Befestigungsende der Schraubenfeder (3) gebogen und mit einer Befestigungsschraube (5) an einer Ausnehmung (4) am Umfang des rohrförmigen Befestigungsrahmens (2) befestigt ist.

10. Vorrichtung nach einem der Ansprüche 1 bis 8, **dadurch gekennzeichnet, dass** das Befestigungsende der Schraubenfeder (3) gebogen und mittels Formschluss am rohrförmigen Befestigungsrahmen (2) befestigt ist.

11. Vorrichtung nach einem der vorhergehenden Ansprüche, **dadurch gekennzeichnet, dass** das Hebeseil (1) aus einem synthetischen Material besteht.

12. Vorrichtung nach einem der vorhergehenden Ansprüche, **dadurch gekennzeichnet, dass** die Befestigung des Hebeseils (1) am rohrförmigen Befestigungsrahmen (2) und/oder an der Schraubenfeder (3) durch separate mechanische Befestigungsmittel sichergestellt wird.

13. Verfahren zum Sichern eines Endes eines geflochtenen Hebeseils (1) an einer Hebevorrichtung, **gekennzeichnet durch**
Anordnen eines rohrförmigen Befestigungsrahmens (2), der an einer Hebevorrichtung zu fixieren ist;
Anordnen einer Schraubenfeder (3), die über den rohrförmigen Befestigungsrahmen (2) zu installieren und zu befestigen ist;
Anordnen eines geflochtenen Hebeseils (1), deren ein Ende hohl gebildet oder hohl bildbar ist;
Schrauben eines Endes des Hebeseils (1) über die Schraubenfeder; und
Befestigen der Schraubenfeder (3) über den rohrförmigen Befestigungsrahmen (2) entweder vor dem Schrauben des Endes des Hebeseils (1) darüber oder nachdem das Hebeseil (1) über die Schraubenfeder (3) geschraubt wurde.

## Revendications

1. Dispositif pour fixer une extrémité d'un câble de levage tressé (1) à un dispositif de levage, **caractérisé en ce qu'**il comprend :
un bâti de fixation tubulaire (2) à fixer sur le dispositif de levage ;
un ressort hélicoïdal (3) qui est agencé pour être installé et fixé sur le bâti de fixation tubulaire (2) ;
un câble de levage (1) comprenant une extrémité creuse ou pouvant fonctionner dans une extrémité creuse ;
dans lequel ladite extrémité du câble de levage (1) est agencée pour être fixée en place par filetage sur les enroulements du ressort hélicoïdal (3) en tant que surface externe des enroulements et en contact ou pour être amenée en contact avec la surface du bâti de fixation tubulaire (2).

2. Dispositif selon la revendication 1, **caractérisé en ce que** le bâti de fixation tubulaire (2) a un trou central (6) pour fixer le bâti de fixation tubulaire (2) au dispositif de levage.

3. Dispositif selon la revendication 2, **caractérisé en ce que** le trou central (6) est angulaire ou rainuré dans la direction longitudinale.

4. Dispositif selon l'une quelconque des revendications précédentes, **caractérisé en ce que** la périphérie externe du bâti de fixation tubulaire (2) est prévue avec un rainurage en forme de spirale, qui s'engrène avec la surface externe du câble de levage (1) installée sur les enroulements du ressort hélicoïdal (3).

5. Dispositif selon l'une quelconque des revendications précédentes, **caractérisé en ce qu'**il y a une rugosité sur la périphérie externe du bâti de fixation tubulaire (2).

6. Dispositif selon l'une quelconque des revendications précédentes, **caractérisé en ce que** le ressort hélicoïdal (3) a approximativement de 2,5 à 3,5 enroulements sur le bâti de fixation tubulaire (2).

7. Dispositif selon l'une quelconque des revendications précédentes, **caractérisé en ce que** le ressort hélicoïdal (3) est réalisé avec de l'acier à ressort.

8. Dispositif selon l'une quelconque des revendications précédentes, **caractérisé en ce que** la surface du ressort hélicoïdal (3) est rugueuse.

9. Dispositif selon l'une quelconque des revendications précédentes, **caractérisé en ce qu'**une extrémité de fixation du ressort hélicoïdal (3) est pliée et fixée à un évidement (4) dans la périphérie du bâti de fixation tubulaire (2) par une fixation par vis (5).

10. Dispositif selon l'une quelconque des revendications 1 à 8, **caractérisé en ce que** l'extrémité de fixation du ressort hélicoïdal (3) est pliée et fixée au bâti de fixation tubulaire (2) par verrouillage par complémentarité de forme.

11. Dispositif selon l'une quelconque des revendications précédentes, **caractérisé en ce que** le câble de levage (1) est réalisé avec un matériau synthétique.

12. Dispositif selon l'une quelconque des revendications précédentes, **caractérisé en ce que** la fixation du câble de levage (1) sur le bâti de fixation tubulaire (2) et/ou sur le ressort hélicoïdal (3) est de plus garantie par un moyen de fixation mécanique séparé.

13. Procédé pour fixer une extrémité d'un câble de levage tressé (1) à un dispositif de levage, **caractérisé par** les étapes suivantes :
agencer un bâti de fixation tubulaire (2) à fixer sur un dispositif de levage ;
agencer un ressort hélicoïdal (3) à installer et à fixer sur le bâti de fixation tubulaire (2) ;
agencer un câble de levage tressé (1), dont une extrémité est formée selon une forme creuse ou peut être formée selon une forme creuse ;
visser une extrémité du câble de levage (1) sur le ressort hélicoïdal ; et
fixer le ressort hélicoïdal (3) sur le bâti de fixation tubulaire (2) avant le vissage de l'extrémité du câble de levage (1) sur ce dernier ou après que le câble de levage (1) a été vissé sur le tube hélicoïdal (3).
